# EUROPÄISCHE PATENTSCHRIFT

(11) **EP 4 254 001 B1**
(45) Veröffentlichungstag und Bekanntmachung des Hinweises auf die Patenterteilung: **13.03.2024**
(21) Anmeldenummer: 22166230.7
(22) Anmeldetag: 01.04.2022
(51) Int. Cl.: G01S 7/487, G01S 7/497, G01S 17/42

(54) **ERFASSUNG VON OBJEKTEN IN EINEM ÜBERWACHUNGSBEREICH**
DETECTION OF OBJECTS IN A SURVEILLANCE AREA
DÉTECTION D'OBJETS DANS UNE ZONE DE SURVEILLANCE

(43) Veröffentlichungstag der Anmeldung: 04.10.2023
(73) Patentinhaber: SICK AG, 79183 Waldkirch (DE)
(72) Erfinder: Krämer, Joachim, 79189 Bad Krozingen (DE); Hammes, Markus, 79117 Freiburg (DE); Böhme, Max, 79112 Freiburg (DE)

(56) Entgegenhaltungen:
- EP-A1- 3 012 663
- EP-A2- 1 632 791
- DE-U1-202017 104 437
- Sick Ag: "B E T R I E B S A N L E I T U N G microScan3 - EtherNet/IP(TM)", , 14. November 2019 (2019-11-14), Seiten 1-216, XP055873167, Gefunden im Internet: URL:https://www.sick.com/media/docs/3/73/1 73/Operating_instructions_microScan3_Ether Net_IP(TM)_de_IM0075173.PDF [gefunden am 2021-12-15]

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 12.

Für optische Überwachungen werden häufig Laserscanner eingesetzt. Darin überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird. In einem beispielsweise aus der EP 1 972 961 A2 oder der EP 2 469 296 B1 bekannten Pulsmittelungsverfahren wird für eine Messung eine Vielzahl von Einzelpulsen ausgesandt, und die Empfangspulse werden statistisch ausgewertet.

Eine wichtige Anwendung ist die Absicherung einer Gefahrenquelle in der Sicherheitstechnik. Der Laserscanner überwacht dabei ein Schutzfeld, das während des Betriebs der Maschine von Bedienpersonal nicht betreten werden darf. Da der Laserscanner Winkel- und Entfernungsinformationen gewinnt, können zweidimensionale Positionen von Objekten in dem Überwachungsbereich und damit auch in dem Schutzfeld ermittelt werden. Erkennt der Laserscanner einen unzulässigen Schutzfeldeingriff, etwa ein Bein einer Bedienperson, so löst er einen Nothalt der Maschine aus.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen. Ein Sicherheitslaserscanner entsprechend derartigen Normen ist beispielsweise aus der DE 43 40 756 A1 bekannt. Die Firma SICK vertreibt den Sicherheitslaserscanner microScan3, und Unterlagen einschließlich einer Betriebsanleitung sind auf ihren Webseiten verfügbar.

Nach einer Forderung der Gerätenorm EN 61496-3 darf auch Fremdlicht oder die gegenseitige Beeinflussung von Sensoren zu keinem gefahrbringenden Ausfall führen. Ein Detektionsverlust droht vor allem, wenn sich eine Fremdlichtquelle, wie ein anderer Infrarotsensor oder ein Baustrahler, hinter einem zu detektierenden dunklen Objekt befindet. Dadurch wird das eigentliche Messsignal des dunklen Objekts von starkem Fremdlicht überlagert und ist ab einem gewissen Punkt nicht mehr zu erkennen. Eine solche Blendung kann durch eine Bestimmung des Fremdlichtpegels im Empfangssignal erkannt und dann der Sensor in einen Verriegelungszustand geschaltet werden, in dem eine überwachte Maschine in einen sicheren Zustand überführt wird. Damit ist die Sicherheit hergestellt und die Norm erfüllt. Im Blendungsfall ist das System dann allerdings nicht mehr verfügbar, solange die Fremdlichteinstrahlung andauert, obwohl an sich keine Gefahr durch Objekte im Überwachungsbereich besteht.

In der noch unveröffentlichten europäischen Patentanmeldung mit dem Aktenzeichen 21187348.4 wird die Blendungserkennung weiter verbessert. Wird eine Blendung erkannt, so wird zunächst nur eine Blendungswarnung ausgelöst. Erst wenn dies mindestens fünf Sekunden anhält, geht der Sensor in den Verriegelungszustand über. Sofern über eine gewisse Dauer keine Blendung vorliegt, wird die Blendungswarnung wieder aufgehoben.

Mit dieser verbesserten Blendungserkennung können unnötige Abschaltungen bei nur vorübergehender kurzer Blendung vermieden werden. Nicht verbessert wird hingegen die Verfügbarkeit im Falle gepulster Fremdlichtquellen vor allem in Form von weiteren Sensoren in der Umgebung, beispielsweise anderen Laserscannern oder 3D-TOF-Kameras. Letztere blenden mit ihrer Flächenbeleuchtung gleich zahlreiche Scanrichtungen, und deshalb wird ein relevanter Anteil der Messdaten innerhalb eines Scans unbrauchbar. An sich stehen hier genug Zeitfenster zwischen den Fremdlichtpulsen zur Verfügung, in denen ohne Blendung gemessen werden kann. Jedoch wird die Blendungswarnung nie aufgehoben, weil sich die Blendungen zu rasch wiederholen. Je nach Scanfrequenz des Laserscanners mit Blendungserkennung und Blendungsfrequenz der Fremdlichtquelle, beispielsweiser der Framerate einer Infrarotkamera, kann die zeitliche Abfolge der Blendungen durch das gepulste Fremdlicht aufgrund von Schwebungseffekten zusätzlich komplexer werden. In jedem Fall bleibt auch bei weniger komplexen Fremdlichtquellen das Problem bestehen, dass sich Blendungen in zu kurzen Abständen wiederholen, die Blendungswarnung damit permanent aktiviert ist und der Laserscanner nach fünf Sekunden in den dauerhaften Blendungsfehler wechselt.

Eine zusätzliche Pegelmessung in einem Laserscanner, die der verbesserten Blendungserkennung der unveröffentlichten europäischen Patentanmeldung mit dem Aktenzeichen 21187348.4 zugrunde liegt, ist auch aus anderen Dokumenten bekannt. Beispielsweise wird in der oben schon kurz erwähnten EP 1 972 961 A2 in einem Pulsmittelungsverfahren aus mehreren Einzelpulsen ein Histogramm aufgebaut und darin neben dem Empfangszeitpunkt für die Abstandsmessung auch ein Maximum oder ein Integral als Maß für die Intensität bestimmt. Die EP 3 059 608 A1 bestimmt den Empfangspegel eines Laserscanners in der Versorgung des Lichtempfängers. Die jeweilige Intensitäts- oder Pegelinformation wird dann aber jeweils nicht für eine Blendungserkennung genutzt, sondern beispielsweise für eine Schwarz-Weiß-Korrektur der Abstandsmessung beziehungsweise eine besondere Anpassung der weiteren Auswertung an den hohen Pegel eines Reflektors.

Die EP 3 267 218 A1 befasst sich mit der Konfiguration eines Clutterfilters für einen Sicherheitslaserscanner. Unter Clutter wird dabei Staub, Regen, Schnee und dergleichen verstanden. Mit einem optimierten Clutterfilter lassen sich gewisse schwierige Detektionssituationen lösen, aber das ist eine andere Problematik als Blendung durch eine Fremdlichtquelle.

In Sicherheitslaserscannern ist weiterhin eine sogenannte Mehrfachauswertung üblich, wie beispielsweise aus EP 3 267 218 A1 oder EP 3 916 286 A1 bekannt. Ein in nur einem einzelnen Scan erkannter Schutzfeldeingriff wird dabei noch toleriert, eine sicherheitsgerichtete Reaktion wird erst ausgelöst, wenn sich dies je nach Auslegung der Mehrfachauswertung zwei-, drei- oder vierfach und bis zu 16 -fach wiederholt. Diese herkömmliche Mehrfachauswertung bezieht sich jedoch auf Schutzfeldeingriffe und nicht auf Blendung durch eine Fremdlichtquelle. Außerdem ist die Mehrfachauswertung in Sekundenbruchteilen abgeschlossen, während eine Blendung erst nach mehreren Sekunden sicherheitsrelevant wird.

Aus der EP 3 012 663 A1 ist eine Anordnung zweier Sicherheitslaserscanner bekannt, die einander als externe Referenzziele verwenden. Dabei wird kurz auf die Möglichkeit der gegenseitigen Blendung eingegangen und angenommen, das dies wegen der kurzen Lichtpulse fast nie vorkommt. Außerdem schaltet der Sicherheitslaserscanner bei einmaligem Überblenden noch nicht ab, sondern prüft zumeist, ob im folgenden Scan dieselbe Überblendung auftritt.

Die DE 20 2017 104 437 U1 offenbart einen optoelektronischen Detektor mit einem Condition-Monitoring-Modul. Eine der überwachten Bedingungen ist eine Blendung des Lichtempfängers.

Aus der EP 1 632 791 A2 ist ein Nachtsichtsystem für ein Kraftfahrzeug bekannt, das eine Nahinfrarot-Pulslichtquelle und eine Datenverarbeitungseinrichtung zur Erkennung von Blendung durch Fremdlichtquellen aufweist.

Es ist daher Aufgabe der Erfindung, für einen gattungsgemäßen Sicherheitssensor einen verbesserten Umgang mit Blendungen zu finden.

Diese Aufgabe wird durch einen optoelektronischen Sensor, insbesondere einen Laserscanner, und ein Verfahren zur Erfassung von Objekten in einem Überwachungsbereich nach Anspruch 1 beziehungsweise 12 gelöst. Der Sensor ist vorzugsweise ein sicherer Sensor, also ein Sicherheitssensor oder Sicherheitslaserscanner. Dabei sind die Begriffe sicher oder Sicherheit im Sinne der einleitend genannten oder vergleichbarer Normen für Maschinensicherheit oder berührungslos wirkende Schutzeinrichtungen zu verstehen, es sind also Maßnahmen ergriffen, um Fehler bis zu einem spezifizierten Sicherheitsniveau zu beherrschen.

Ein Lichtsender sendet mindestens ein Lichtbündel in einen Überwachungsbereich aus, vorzugsweise einen insbesondere kollimierten Lichtstrahl mit kleinem Querschnitt. Mit Hilfe einer beweglichen Ablenkeinheit wird das ausgesandte Lichtbündel periodisch durch den Überwachungsbereich geführt. Ein Lichtempfänger erzeugt aus dem reflektierten Lichtbündel beziehungsweise Lichtstrahl ein Empfangssignal. Dabei wird hier zwischen gerichteter Reflexion und ungerichteter Streuung oder Remission begrifflich nicht unterschieden. So wird mit der Bewegung der Ablenkeinheit wiederholt eine Ebene in dem Überwachungsbereich abgetastet. In einigen Ausführungsformen erzeugt der Lichtsender mehrere voneinander beabstandete Lichtstrahlen, und der Lichtempfänger ist entsprechend für den Empfang mehrerer Lichtstrahlen ausgebildet. Dadurch wird eine Mehrebenenabtastung ermöglicht, der Sensor ist dann ein Mehrebenenscanner.

Das Empfangssignal wird in einer Steuer- und Auswertungseinheit ausgewertet, um Informationen über die erfassten Objekte zu gewinnen. Insbesondere wird mit einem Lichtlaufzeitverfahren ein jeweiliger Abstand gemessen. Dabei wird vorzugsweise pulsbasiert gemessen, der ausgesandte Lichtstrahl weist also mindestens einen Lichtpuls auf, dessen Laufzeit bestimmt wird. Neben einem Einzelpulsverfahren ist ein Pulsmittelungsverfahren möglich, wie dies in den einleitend genannten EP 1 972 961 A2 oder EP 2 469 296 B1 beschrieben ist.

Die Steuer- und Auswertungseinheit erkennt zudem eine Blendung des Lichtempfängers. Wenn die Blendung eine sichere Erfassung verhindert, insbesondere keine sichere Schutzfeldauswertung mehr zulässt, geht der Sensor in einen Blendungszustand über. Dabei bedeutet Verhindern einer sicheren Erfassung, dass die von der Norm geforderte Sicherheit nicht mehr gegeben ist und tatsächlich vorhandene Objekte womöglich nicht mehr erfasst werden. Im Einzelfall kann durchaus noch ein Objekt erfassbar sein, aber der Sensor kann dies im Blendungszustand nicht mehr über den vollen spezifizierten Funktionsumfang garantieren. Der Blendungszustand kann beispielsweise als Fehler gemeldet werden, die Leistungsfähigkeit des Sensors, etwa die Reichweite, kann eingeschränkt werden, so dass Sicherheit nur noch in einem geringeren Funktionsumfang gewährleistet ist, oder es erfolgt eine sicherheitsgerichtete Reaktion, d.h. es wird ein Signal ausgegeben, mit dem eine überwachte Maschine in einen sicheren Zustand überführt wird.

Die Erfindung geht von dem Grundgedanken aus, dass nicht alle Blendungen des Sensors sicherheitskritisch sind. Um zu entscheiden, ob eine Blendung die sichere Erfassung verhindert und der Blendungszustand eingenommen werden muss, werden erste Phasen mit Blendung und zweite Phasen ohne Blendung erkannt, und die Verteilung der ersten Phasen und der zweiten Phasen wird bewertet. Der Sensor muss nicht sofort mit der ersten Blendung in den Blendungszustand übergehen, es steht ein gewisses Zeitfenster von beispielsweise fünf Sekunden zur Verfügung, um dies zu prüfen und die Verteilung zu bestimmen. Dabei müssen nicht explizit sowohl erste Phasen als auch zweite Phasen bestimmt werden, da eines das Komplement des anderen ist, es genügt also die unmittelbare Bestimmung nur der ersten Phasen oder nur der zweiten Phasen. Eine Phase ist eine Messperiode mit Bestimmung eines Messwerts, insbesondere Abstandswerts für die aktuelle Winkelstellung der Abtasteinheit sein, oder eine Periode der beweglichen Abtasteinheit, was auch als ein Scan bezeichnet wird.

Durch Bewertung der Verteilung der ersten Phasen und der zweiten Phasen kann zwischen einer Dauerblendung und einer wiederkehrenden oder periodischen kurzen Blendung unterschieden werden. Während eine Dauerblendung in der Regel die sichere Erfassung verhindert, kann eine periodische Blendung toleriert werden, sofern genügend zweite Phasen ohne Blendung verbleiben. Erfindungsgemäß wird als Kriterium der Bewertung der Verteilung geprüft, ob die ersten Phasen einen kritischen Anteil überschreiten. Das lässt sich dann als eine Art Tastgrad (Duty Cycle) verstehen: Der Blendungszustand wird erst eingenommen, wenn die ersten Phasen mit Blendung zu dominant werden. Ein kritischer Anteil wird in Ausführungsformen genauer spezifiziert, es kann der kumulierte Zeitanteil oder die Anzahl der ersten Phasen gegenüber der Anzahl der zweiten Phasen, aber auch abhängig von der Abfolge sein.

Bei der erfindungsgemäßen Blendungserkennung sind zwei Aspekte zu unterscheiden. Es wird erstens erkannt, ob der Lichtempfänger geblendet ist, um eine Phase als erste Phase oder zweite Phase einzuordnen. Dann wird zweitens die Verteilung der ersten und zweiten Phasen bewertet, um festzustellen, ob der Sensor Objekte trotz der zumindest gelegentlichen Blendung weiterhin sicher erfassen kann oder ob die Blendung die sichere Erfassung verhindert.

Die Erfindung hat den Vorteil, dass die Verfügbarkeit des Sensors vor allem in räumlicher Nähe zu gepulsten Fremdlichtquellen deutlich erhöht wird, in erster Linie weiteren Sensoren wie anderen Laserscannern oder 3D-TOF-Kameras. Es gibt also weniger Zeiten, in denen der Sensor aufgrund der Blendung in den Verriegelungszustand übergeht, obwohl objektiv keine sicherheitskritischen Objekte im Überwachungsbereich anwesend sind. Der Sensor kann in vielen Fällen trotz des Fremdlichtstörers seine Funktion weiterhin sicher erfüllen. Dabei ist die Blendungsempfindlichkeit sogar anpassbar, denn welche Verteilungen und insbesondere welcher kritische Anteil an ersten Phasen mit Blendung die sichere Erfassung verhindert, kann von der Anwendung, der Gerätevariante und beispielsweise auch der Konfiguration des Sensors abhängig gemacht werden, insbesondere seiner aktuell überwachten Schutzfelder. Zudem werden verbesserte Diagnosemöglichkeiten bereitgestellt, denn dem Benutzer kann angezeigt werden, um welche Form der Blendung es sich handelt, insbesondere periodische Blendung oder Dauerblendung. Dadurch können möglicherweise Veränderungen in der Montageposition und -ausrichtung von Sensor und Fremdlichtstörern vorgenommen werden, um eine Blendung zu verringern oder zu vermeiden.

Die Steuer- und Auswertungseinheit ist dafür ausgebildet, die ersten Phasen über ein Zeitintervall zu zählen oder eine kumulierte Dauer der ersten Phasen über das Zeitintervall zu bestimmen. Dies ist eine summarische Betrachtung der Verteilung. Das Zeitintervall beträgt einige Sekunden, insbesondere den fünf Sekunden, über die nach Sicherheitsnormen wie der EN 61496-3 eine verschlechterte Detektionsfähigkeit noch hingenommen werden kann, ohne sicherheitsgerichtet reagieren zu müssen. Das Zeitintervall kann immer wieder neu anfangen oder rollierend gezählt beziehungsweise eine erfindungsgemäß kumulierte Dauer bestimmt werden. Weiterhin sind die Phasen jeweilige Messperioden oder Scans. Dann sind Zählen und Bestimmen der kumulierten Dauer letztlich das gleiche, da die kumulierte Dauer das Produkt der Anzahl Phasen mal Dauer einer Phase ist. Da die ersten Phasen das Komplement der zweiten Phasen sind, sind über das Zeitintervall beziehungsweise die bekannte Gesamtzahl Messperioden oder Scans in dem Zeitintervall erste Phasen und zweite Phasen zugleich bestimmt. Es ist daher ebenso möglich, zweite Phasen zu zählen beziehungsweise deren kumulierte Dauer zu bestimmen, das wird vorzugsweise nicht unterschieden und ist auch eine Form des Zählens beziehungsweise der Bestimmung der kumulierten Dauer erster Phasen. Weiterhin sei angemerkt, dass Anzahl und kumulierte Dauer erster Phasen miteinander als Produkt aus Anzahl und Dauer einer einzelnen ersten Phase zusammenhängen, sofern unter ersten Phasen ein regelmäßiger Vorgang wie eine Messperiode oder ein Scan verstanden wird.

Die Steuer- und Auswertungseinheit ist alternativ oder zusätzlich dafür ausgebildet, ein Zeitmuster der ersten Phasen und der zweiten Phasen zu bestimmen und anhand des Zeitmusters zu entscheiden, ob die Blendung die Erfassung beeinträchtigt. Dies ersetzt oder ergänzt eine kumulierte Betrachtung. Zeitmuster können klassifiziert werden in solche, die eine sichere Erfassung noch ermöglichen und solche, die das verhindern. Das geht über ein bloßes summarisches Bewerten hinaus, beispielsweise kann eine lang anhaltende erste Phase beziehungsweise eine direkte Abfolge vieler erste Phasen kritischer sein als eine Vielzahl kurzer intermittierender erster Phasen, die sich in Summe vielleicht sogar über ein größere Dauer erstrecken. Insbesondere ist es möglich, ein periodisches Muster einer gepulsten Fremdlichtquelle zu erkennen, wobei dies nicht unbedingt direkt die Periode der Fremdlichtquelle aufdeckt, sondern ein Zeitmuster einer Schwebung zwischen einer Frequenz der periodischen Abtastung des Sensors und der Pulswiederholfrequenz der Fremdlichtquelle entstehen kann.

Die Steuer- und Auswertungseinheit ist bevorzugt dafür ausgebildet, die Erfassung von Objekten in Zeiten zu legen, in denen gemäß einem erkannten Zeitmuster voraussichtlich zweite Phasen liegen. Ist ein Zeitmuster einmal bekannt, gibt es auch eine Erwartung, wie sich das fortsetzt. Dadurch kann unter Umständen ein einmaliger oder wiederholter Zeitversatz in die Messung eingeführt werden, mit dem dann gezielt gemessen wird, wenn der Sensor geblendet wird, d.h. in zweiten Phasen. Gerade in sicherheitstechnischer Anwendung wird die Blendungsüberwachung fortgesetzt, um damit zu verifizieren, ob die Erwartung auch eingetroffen ist, dass nun die Blendung eine sichere Erfassung nicht mehr verhindert.

Der Sensor weist bevorzugt einen zusätzlichen Lichtempfänger zur Blendungserkennung auf. Während bisher Ausführungsformen gemäß dem oben genannten zweiten Aspekt beschrieben wurden, wie eine Verteilung erster Phasen und zweiter Phasen bewertet werden kann, ob eine sichere Erfassung durch Blendung verhindert wird, geht es nun um Ausführungsformen, die den ersten Aspekt ausgestalten, wie eine Blendung überhaupt erkannt wird, also erste Phasen und zweite Phasen erkannt werden. Dafür kann ein dedizierter zusätzliche Lichtempfänger vorgesehen sein. Dadurch wird die eigentliche Messung mit dem Lichtempfänger zu Erfassung des remittierten Lichtstrahls entlastet. Ein Sicherheitslaserscanner weist in der Regel weitere Lichtempfänger auf, mit denen die Transmissionsfähigkeit der Frontscheibe überwacht wird, diese können in Doppelfunktion auch für eine Blendungserkennung eingesetzt werden.

Die Steuer- und Auswertungseinheit ist bevorzugt dafür ausgebildet, eine Blendung anhand des Empfangssignals zu erkennen. In dieser Ausführungsform erfolgt die Blendungserkennung anhand des Empfangssignals, also aus dem remittierten Lichtstrahl beziehungsweise dem Messstrahl, Abtaststrahl oder Scanstrahl. Es sind dann keine zusätzlichen Bauteile erforderlich, das Empfangssignal wird einer weiteren Auswertung neben der Erfassung von Informationen über Objekte beziehungsweise eine Abstandsmessung unterzogen, mit der eine Blendung erkannt wird. Die Blendungserkennung kann zur besseren Unterscheidung von Nutzlicht des remittierten Lichtstrahls und Fremdlicht eigene Zeitabschnitte des Empfangssignals nutzen, beispielsweise ganz am Anfang oder Ende einer jeweiligen Messperiode. Eine Blendungserkennung mittels zusätzlichem Lichtempfänger kann mit einer Blendungserkennung aus dem Empfangssignal kombiniert werden.

Die Steuer- und Auswertungseinheit ist bevorzugt dafür ausgebildet, eine Blendung anhand einer Pegelbestimmung des Empfangssignals oder einer Bestimmung des Signal-Rausch-Verhältnisses des Empfangssignals zu erkennen. Dafür wird beispielsweise der in dem Lichtempfänger fließende Strom gemessen, insbesondere auch in einer Versorgung des Lichtempfängers wie in der einleitend genannten EP 3 059 608 A1. Der Pegel kann ein Gesamtpegel sein, also die Überlagerung von Fremdlicht und Nutzlicht, oder es kann beispielsweise durch Tiefpassfilterung nur Fremdlicht als ein Gleichlichtanteil gemessen werden. Eine gepulste Fremdlichtquelle wird aber durch Tiefpassfilterung gerade nicht erfasst. Es kann daher sinnvoll sein, den in dem Lichtempfänger fließenden Strom zu integrieren. Der Pegel und das Rauschen erhöhen sich, wenn Fremdlicht einfällt, entsprechend verschlechtert sich das Signal-Rausch-Verhältnis, und ab einem jeweiligen Grenzwert kann dies als Blendung aufgefasst werden.

Die Steuer- und Auswertungseinheit ist bevorzugt dafür ausgebildet, ein Reflektorbit zu setzen, wenn der Pegel höher als eine Reflektorschwelle ist und/oder ein Rauschflag zu setzen, wenn das Signal-Rauschverhältnis geringer als eine Rauschschwelle. Ein Pegel oberhalb der Reflektorschwelle bedeutet, dass der Lichtstrahl auf einen Reflektor gefallen ist, da von einem sonstigen Objekt so viel Licht nicht remittiert würde. Das ist die Funktion, die von einer Reflektorerkennung üblicherweise erwartet wird. Die Ursache für ein gesetztes Rauschflag kann aber statt eines Reflektors auch eine Blendung durch eine Fremdlichtquelle sein. Das Rauschflag zeigt an, dass das Signal-Rausch-Verhältnis gering ist. Die Informationsübermittlung in Form von Flags oder Bits ist besonders vorteilhaft, die genannten Schwellenkriterien können aber alternativ auch anderweitig angewandt und verarbeitet werden.

Die Steuer- und Auswertungseinheit ist bevorzugt dafür ausgebildet, eine Phase als erste Phase mit Blendung zu erkennen, wenn der Pegel des Empfangssignals höher als eine Reflektorschwelle und/oder das Signal-Rauschverhältnis geringer als eine Rauschschwelle und zugleich kein Objekt erfasst ist. In diesem Fall soll mit "und zugleich" eine Klammerung ausgedrückt werden, die Bedingung, dass kein Objekt erfasst ist, soll also zusätzlich zu der zuvor genannten Alternative vorliegen. Besonders anschaulich kann dies über die soeben eingeführten Flags ausgedrückt werden: (Reflektor und/oder Rauschen) UND kein Objekt erfasst. Wenn nämlich kein Objekt erfasst ist, im Falle eines Lichtlaufzeitverfahrens kein Abstandswert gemessen wurde, ist die Reflektorschwelle nicht wegen eines angetasteten Reflektors überschritten, zu dem ein Abstand gemessen worden wäre. Der hohe Pegel beziehungsweise die Tatsache, dass das Signal-Rausch-Verhältnis keine Messung zulässt, wird folglich auf eine Blendung zurückgeführt. In einer bevorzugten Ausführungsform signalisiert die Abstandsmessung die Tatsache, dass kein Objekt erfasst wurde, durch einen unendlichen Abstandswert beziehungsweise einen hohen Abstandswert jenseits der Reichweite. Die Erkennung einer ersten Phase mit Blendung ist, wie bereits öfters erwähnt, ebenso komplementär über die Erkennung zweiter Phasen möglich, mit entsprechenden invertierten Kriterien.

Die Steuer- und Auswertungseinheit ist bevorzugt dafür ausgebildet festzustellen, ob sich ein Objekt in einem innerhalb des Überwachungsbereichs konfigurierten Schutzfeld befindet, und in diesem Fall eine sicherheitsgerichtete Reaktion einzuleiten. Der Sensor umfasst demnach eine Schutzfeldauswertung, die einleitend bereits beschrieben wurde. Im Falle eines Schutzfeldeingriffs wird bevorzugt über einen sicheren, insbesondere zweikanaligen Ausgang des Sensors (OSSD, Output Signal Switching Device) ein Abschaltsignal ausgegeben, mit dem eine überwachte Maschine in einen sicheren Zustand überführt wird, beispielsweise indem die Maschine angehalten oder verlangsamt wird oder eine Ausweichbewegung durchführt. Die Prüfung der Blendung kann auf die tatsächlich konfigurierten Schutzfelder begrenzt werden.

Die Steuer- und Auswertungseinheit ist bevorzugt dafür ausgebildet, die ersten Phasen und zweiten Phasen in Abhängigkeit von einer Winkelstellung der Ablenkeinheit zu bestimmen. Die Blendung wird dann winkelabhängig betrachtet. Es wird pro Winkel oder Gruppe benachbarter Winkel festgestellt, ob, wie oft, wie lange oder mit welchem Zeitmuster der Sensor geblendet wird, wie sich also die Verteilung der ersten Phasen und zweiten Phasen winkelabhängig darstellt. Es kann ein Blendungsflag oder -bit je Winkel in ersten Phasen gesetzt und in zweiten Phasen nicht gesetzt werden, wobei das Blendungsflag wie oben beschrieben aus einem Reflektorflag und/oder Rauschflag abgeleitet sein kann. Die Bewertung der Verteilung muss keineswegs auf einzelne Winkel beschränkt bleiben, sie kann durchaus Nachbarschaften berücksichtigen. Ein einziger geblendeter Winkel ist weniger kritisch als ein ganzer Sektor mit zahlreichen geblendeten Winkeln nebeneinander. Beispielsweise kann ein geblendeter Winkel oder Winkelbereich klein genug sein, um Objekte mit einem geforderten Detektionsvermögen immer noch sicher zu detektieren, etwa ein Bein oder einen Körper, wenn nur über die Reichweite hinweg fingerbreite Winkelbereiche von der Blendung betroffen sind. Es ist auch denkbar, den Funktionsumfang einzuschränken, etwa von Fingerdetektion auf Beindetektion herunterzuschalten. Wenn die Anwendung Fingerdetektion verlangt, ist das natürlich sicherheitskritisch, aber womöglich ist Fingerdetektion gar nicht gefordert. Es ist auch denkbar diese Einschränkung der Detektionsfähigkeit auszugeben, so dass in diesem Fall die Fingerüberwachung durch eine andere Maßnahme oder einen anderen Sensor übernommen wird. Dies ist insbesondere dann hilfreich, wenn dieser andere Sensor Einschränkungen mit sich bringt und daher nicht dauerhaft für diesen Zweck eingesetzt werden sollte, wie etwa ein Ultraschallsensor oder ein Radar, das den Laserscanner nicht vollständig ersetzen könnte. Ein weiteres Beispiel wurde schon genannt, wenn von einer Blendung betroffene Winkel außerhalb von Schutzfeldern liegen, muss darauf nicht reagiert werden, weil eine derartige Blendung nicht sicherheitsrelevant ist.

Die Steuer- und Auswertungseinheit ist bevorzugt dafür ausgebildet, in dem Blendungszustand oder beim Übergang in den Blendungszustand eine sicherheitsgerichtete Reaktion auszulösen. In dieser Ausführungsform wird der Blendungszustand nicht toleriert, weil eine sichere Erfassung verhindert ist. Der Sensor kann seine Sicherheitsfunktion nicht garantieren. Zuvor wird vorzugsweise noch geprüft, ob nur der Funktionsumfang reduziert ist und dies weiterhin sicher ist, beispielsweise vorübergehend nur ein geringeres Detektionsvermögen zur Verfügung steht oder eine sichere Reichweite eingeschränkt werden muss, was aber in der derzeitigen Anwendung beziehungsweise bei der zu diesem Zeitpunkt aktiven Schutzfeldüberwachung gar nicht gefordert wird, oder die Blendung nur Winkelbereiche außerhalb von Schutzfeldern betrifft. Die sicherheitsgerichtete Reaktion entspricht derjenigen bei einem unzulässigen Schutzfeldeingriff und überführt insbesondere eine überwachte Maschine in einen sicheren Zustand.

Die Steuer- und Auswertungseinheit ist bevorzugt dafür ausgebildet, ein Einschränkungssignal auszugeben, das eine eingeschränkte Detektionsfähigkeit des Sensors anzeigt, insbesondere eine verringerte Reichweite. Wie schon angesprochen, muss der Blendungszustand nicht in allen Situationen sofort bedeuten, dass keine Sicherheit mehr gewährleistet ist. Es kann Zwischenzustände geben, in denen lediglich der volle Funktionsumfang nicht zur Verfügung steht. Beispielsweise kann die Blendung die Reichweite einschränken, bis zu der Objekte sicher erfasst werden. Dann sind Schutzfelder, die eine größere Reichweite erfordern, nicht verfügbar, so lange der Blendungszustand andauert. Der reduzierte Funktionsumfang kann durch das Einschränkungssignal auf die überwachte Maschine übertragen werden. Prozessschritte, die einer vollen Detektionsfähigkeit bedürfen, insbesondere einer höheren Reichweite für entsprechend weit entfernt reichende Schutzfelder, sind dann nicht mehr ansteuerbar. Beispielsweise ist die Bewegungsgeschwindigkeit eines überwachten Roboters dann eingeschränkt, ein weitgreifender Bearbeitungsschritt vorübergehend nicht möglich, oder die Geschwindigkeit eines Fahrzeugs mit darauf in mobiler Anwendung angeordnetem Sensor wird eingeschränkt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines Laserscanners;
- Fig. 2: eine beispielhafte Darstellung von Zustandsflags einschließlich Reflektorflag und Rauschflag über mehrere Scans eines Laserscanners in einem Winkelbereich bei Blendung mit einer Dauerfremdlichtquelle;
- Fig. 3: eine beispielhafte Darstellung von Abstandsmessungen über mehrere Scans und einen Winkelbereich entsprechend Figur 2;
- Fig. 4: eine beispielhafte Darstellung von Blendungsflags über mehrere Scans und einen Winkelbereich entsprechend Figur 2;
- Fig. 5: eine beispielhafte Darstellung von Zustandsflags entsprechend Figur 2 nun bei Blendung mit einer periodischen Fremdlichtquelle;
- Fig. 6: eine beispielhafte Darstellung von Abstandsmessungen entsprechend Figur 3 nun bei Blendung mit einer periodischen Fremdlichtquelle wie in Figur 5; und
- Fig. 7: eine beispielhafte Darstellung von Blendungsflags entsprechend Figur 4 nun bei Blendung mit einer periodischen Fremdlichtquelle wie in Figur 5.

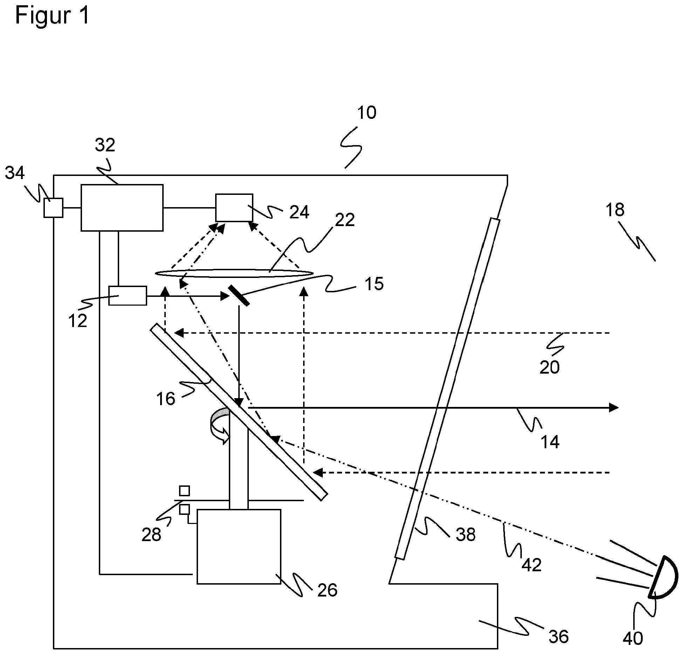

Figur 1 zeigt eine schematische Schnittdarstellung durch einen Laserscanner 10. Ein von einem Lichtsender 12, beispielsweise einem Laser, erzeugter Lichtstrahl 14 wird über einen Umlenkspiegel 15 und eine drehbare Ablenkeinheit 16 in einen Überwachungsbereich 18 gelenkt und dort von einem gegebenenfalls vorhandenen Objekt remittiert. Das remittierte Licht 20 gelangt wieder zu dem Laserscanner 10 zurück und wird dort über die Ablenkeinheit 16 durch eine Empfangsoptik 22 auf einen Lichtempfänger 24 geführt, beispielsweise einer Photodiode, der ein Empfangssignal erzeugt.

Die Ablenkeinheit 16 ist in der Regel als Drehspiegeleinheit ausgestaltet, die durch Antrieb eines Motors 26 kontinuierlich rotiert. Alternativ kann der Messkopf Lichtsender 12 und vorzugsweise auch einschließlich Lichtempfänger 24 rotieren. Die jeweilige Winkelstellung wird über einen Encoder 28 erfasst. Der Lichtstrahl 14 überstreicht somit den durch die Rotationsbewegung erzeugten Überwachungsbereich 18. Wird von dem Lichtempfänger 24 remittiertes Licht 20 aus dem Überwachungsbereich 18 empfangen, so kann aus der Winkelstellung der Ablenkeinheit 16 mittels des Encoders 28 auf die Winkellage des Objektes in dem Überwachungsbereich 18 geschlossen werden.

Zusätzlich kann unter Verwendung der Empfangssignale des Lichtempfängers 24 auf die Entfernung des Objektes von dem Laserscanner 10 geschlossen werden, beispielsweise in an sich bekannter Weise aus der Laufzeit einzelner Lichtpulse von ihrem Aussenden bis zu dem Empfang nach Reflexion an dem Objekt in dem Überwachungsbereich 18, in einem Pulsmittelungsverfahren, einem Phasenverfahren oder einem FMCW-Verfahren.

Die Ermittlung der Entfernung des Objektes von dem Laserscanner 10 erfolgt in einer Steuer- und Auswertungseinheit 32, die außer mit dem Lichtempfänger 24 auch mit dem Lichtsender 12, dem Motor 26 und dem Encoder 28 verbunden ist. Somit stehen über den Winkel und die Entfernung zweidimensionale Polarkoordinaten aller Objekte in dem Überwachungsbereich 18 zur Verfügung. In einer weiteren Ausführungsform werden mehrere Lichtstrahlen 14 in unterschiedlicher Elevation ausgesandt, um einen Mehrlagenscanner zu bilden und mehrere Lagen in einem dreidimensionalen Überwachungsbereich 18 zu erfassen. Sämtliche Messwerte können über einen Ausgang 34 ausgegeben werden. Alle genannten Funktionskomponenten sind in einem Gehäuse 36 angeordnet, das im Bereich des Lichtaus- und Lichteintritts eine Frontscheibe 38 aufweist.

In einer sicherheitstechnischen Anwendung vergleicht die Steuer- und Auswertungseinheit 32 die Position der erfassten Objekte mit einem oder mehreren Schutzfeldern, deren Geometrie der Steuer- und Auswertungseinheit 32 durch entsprechende Parameter vorgegeben oder konfiguriert ist. Damit erkennt die Steuer- und Auswertungseinheit 32, ob ein Schutzfeld verletzt ist, also ob sich ein unzulässiges Objekt darin befindet, und schaltet je nach Ergebnis den in dieser Ausführungsform als Sicherheitsausgang (OSSD, Output Signal Switching Device) ausgebildeten Ausgang 34. Dadurch wird eine sicherheitsgerichtete Reaktion ausgelöst, beispielswiese ein Nothalt, ein Bremsen, Verlangsamen oder Ausweichen einer angeschlossenen und von dem Laserscanner 10 überwachten Maschine. Die überwachte Maschine ist beispielsweise eine industrielle Maschine, ein Roboter oder in mobiler Anwendung ein insbesondere fahrerloses Fahrzeug. Ein solcher Laserscanner ist durch Erfüllung der einleitend genannten Normen und die dafür erforderlichen Maßnahmen als Sicherheitslaserscanner ausgebildet.

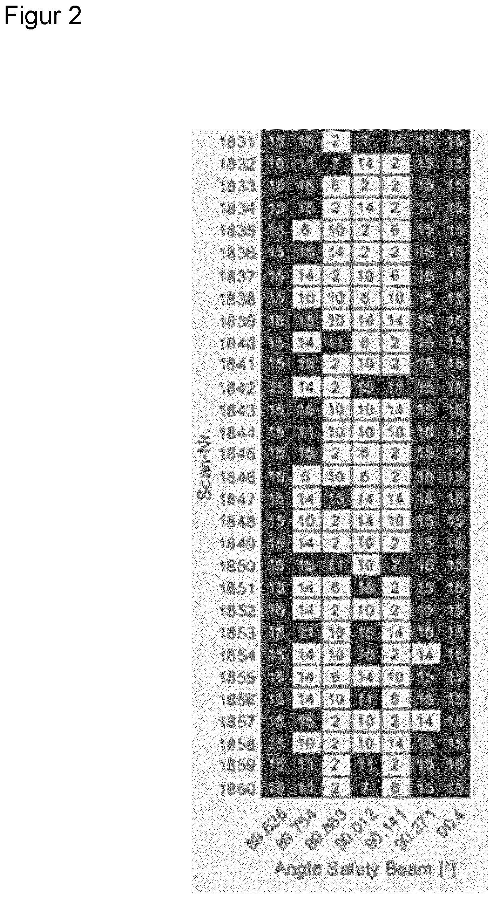

Der Laserscanner 10 kann durch eine externe Lichtquelle 40 geblendet werden. Die externe Lichtquelle 40 muss sich dabei nicht zwangsläufig im Überwachungsbereich 18 befinden. Es reicht aus, wenn von der externen Lichtquelle 40 ausgesandtes Fremdlicht 42 den Lichtempfänger 24 des Laserscanners 10 erreicht und dort zu einer Blendung des Lichtempfängers 24 führt. Die Steuer- und Auswertungseinheit 32 erkennt eine derartige Blendung und ist in der Lage, zwischen einer die sichere Funktion beeinträchtigenden Dauerblendung beispielsweise durch einen Baustrahler und einer periodischen Blendung beispielsweise eines weiteren Laserscanners oder einer 3D-TOF-Kamera zu unterscheiden, die weiterhin jedenfalls bei einem für die derzeitige Sicherheitsanwendung ausreichenden, eingeschränkten Funktionsumfang eine sichere Objekterfassung ermöglicht. Diese Blendungserkennung wird nachfolgend unter Bezugnahme auf die Figuren 2 bis 7 näher erläutert. Wird eine nicht tolerierbare Blendung erkannt, so führt dies vorzugsweise in sicherheitstechnischer Anwendung zu einer sicherheitsgerichteten Reaktion, ansonsten kann eine Blendungswarnung ausgegeben oder der Funktionsumfang reduziert werden.

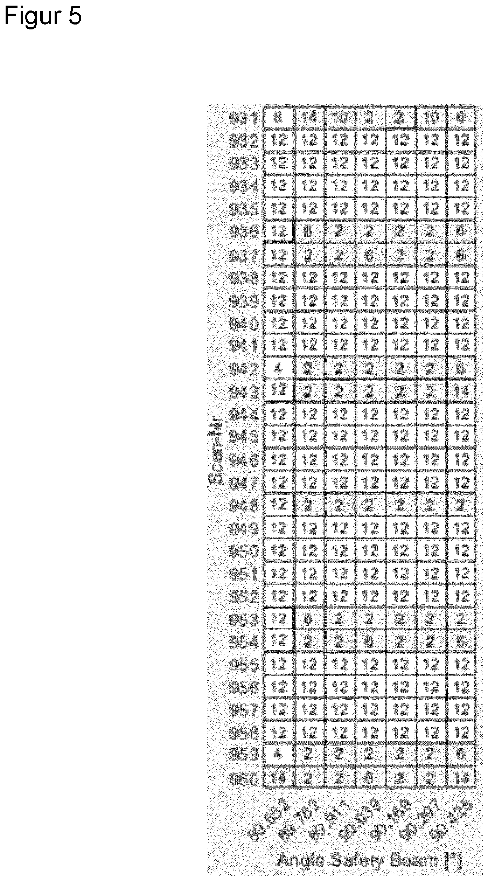

Die Figuren 2 bis 4 zeigen Beispiele von Auswertungen mehrerer Scans über einen Winkelbereich zunächst unter Dauerblendung und dann die Figuren 5 bis 7 entsprechende Auswertungen bei einer Blendung durch periodisches Fremdlicht. Dabei ist jeweils auf der X-Achse ein rein beispielhafter Winkelausschnitt mit sieben Messungen in aufeinanderfolgenden Winkelstellungen und auf der Y-Achse die laufende Nummer der Scans aufgetragen, was einer Zeitachse entspricht, denn jeder Scan dauert eine Umlaufperiode der Ablenkeinheit 16. Dadurch entsteht ein Raster aus Zellen, in denen jeweils ein Mess- oder Auswertungsergebnis für den zugehörigen Winkel und Scan eingetragen ist. Im Falle eines Pulsmittelungsverfahren sind in den Zellen die Einzelmessungen für eine Histogrammerfassung und Abstandsbestimmung bereits zusammengefasst.

Figur 2 zeigt Zustandsflags, die bei der Messung gewonnen werden. Es gibt in diesem Beispiel vier solcher Flags oder Bits, daher Werte von 0...15, wobei hier aber nur ein Reflektorflag als Bit 0 und ein Rauschflag als Bit 1 von Interesse sind. Diese besondere Repräsentation für eine Reflektor- und Rauscherkennung ist rein beispielhaft zu verstehen und kann abgewandelt werden. In Figur 2 sind Messungen, in denen nur das Reflektorflag gesetzt ist, als helle Zellen und Messungen, in denen Reflektorflag und Rauschflag gesetzt sind, als dunkle Zellen dargestellt. Dabei sei daran erinnert, dass eine Situation mit Dauerblendung gezeigt ist, in diesem Fall die Erfassung eines 70 mm-Probekörpers, der direkt vor einem horizontal ausgerichteten 1500 W-Halogenstrahler angeordnet ist. In anderen Messsituationen ist der Regelfall, dass weder Reflektorflag noch das Rauschflag gesetzt sind.

Denn durch das Reflektorflag soll eigentlich eine Reflektorerkennung implementiert sein, d.h. erkannt werden, ob ein Objekt, zu dem ein Abstand gemessen wurde, ein Reflektor ist, um das als zusätzliche Messinformation auszugeben oder die Abstandsmessung zu korrigieren. Das Rauschflag wiederum zeigt ein starkes Rauschen oder schlechtes Signal-Rauschverhältnis an. Beides sind zunächst nur Indizien für eine Blendung. Ein Reflektor und ein starkes Rauschen beziehungsweise schlechtes Signal-Rausch-Verhältnis können durch Pegelauswertungen und sonstige Auswertungen des Empfangssignals erkannt werden. Beispielsweise wird das Reflektorbit gesetzt, wenn der Strom in dem Lichtempfänger 24 eine Schwelle überschreitet. Ein Rauschen kann insbesondere gemessen werden, während der Lichtsender 12 inaktiv ist, beziehungsweise zu Zeiten, die nicht einem empfangenen Lichtpuls entsprechen. Ein Gleichlichtanteil des Fremdlichts kann auch durch Tiefpassfilterung isoliert werden.

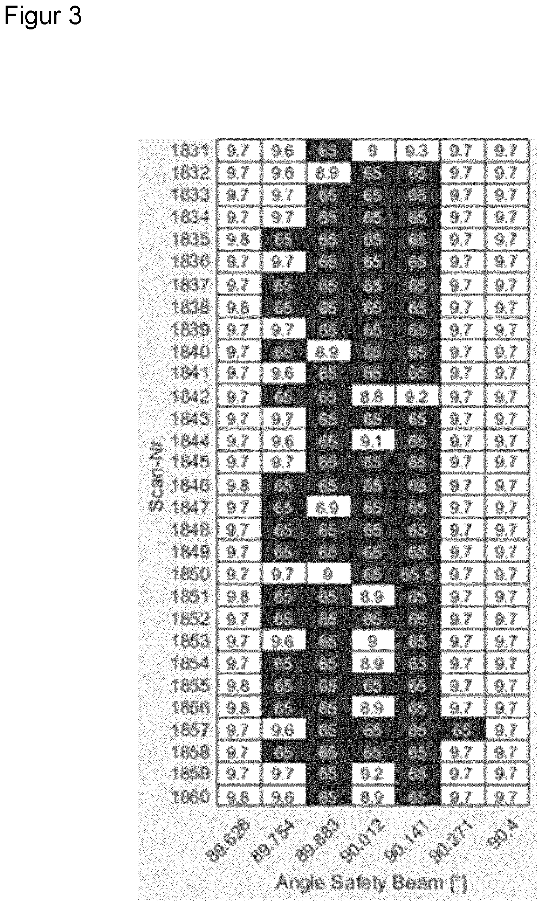

Figur 3 zeigt gemessene Abstandswerte. Die Eintragungen an einer Zelle gleicher Position in den Figuren 2 bis 4 entsprechen einander. In den hellen Zellen der Figur 3 ist der Abstand zu einem Objekt in Metern oder einer sonstigen Längeneinheit eingetragen. In den dunklen Zellen steht der Wert "65" für "unendlich", d.h. hier wurde kein Objekt erfasst beziehungsweise konnte kein Abstand gemessen werden. In den hellen Zellen wurde demnach trotz Reflektor- und Rauschflag noch ein Abstand gemessen. In den dunklen Zellen ist für den Laserscanner 10 nicht klar, ob hier womöglich ein Objekt übersehen wurde. Faktisch ist das in der Beispielsituation der Fall, denn der Probekörper erstreckt sich auch über die dunklen Zellen.

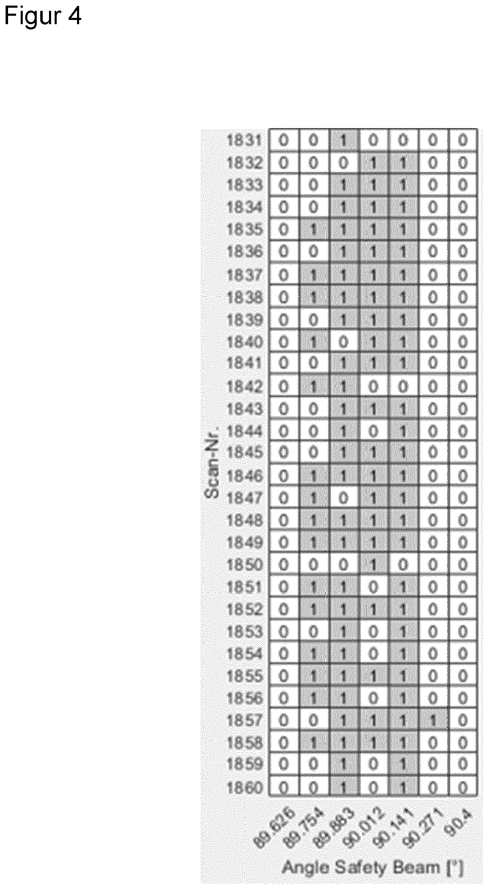

Figur 4 zeigt Blendungsflags, die durch eine Kombination der Auswertungen gemäß Figur 2 und 3 gewonnen werden. In Figur 4 werden Blendungsflags sowohl numerisch durch eine Eins als auch durch dunkle Farbgebung hervorgehoben. Eine Blendung liegt vor, wenn zugleich ein hoher Pegel anliegt und kein Abstand gemessen werden kann. Ersteres wird in Figur 2 durch ein gesetztes Reflektor- und/oder Rauschflag angezeigt, letzteres in Figur 3 durch einen Wert "65" oder unendlich. Die Auswertung lässt sich somit in der Formel Blendungsflag = (Reflektorflag und/oder Noiseflag) UND kein Objekt beziehungsweise Abstand unendlich) zusammenfassen.

Wie sich zeigt, sind in diesem Beispiel zwar nicht alle Einzelmessungen oder Zellen, sehr wohl aber alle Scans oder Zeilen geblendet. Damit ist die Detektionsfähigkeit eingeschränkt. Eine nachfolgende Auswertung beurteilt nun, ob diese Form der Blendung toleriert werden kann oder nicht. In räumlicher Hinsicht lässt eine Blendung nur über vereinzelte oder wenige benachbarte Winkelschritte möglicherweise die sichere Erfassung zumindest bei gröberem Detektionsvermögen wie Arm-, Bein- oder Körperschutz noch zu, oder es ist eine sichere Erfassung jedenfalls noch bis zu einer reduzierten Reichweite möglich. Weiterhin ist eine Blendung außerhalb von Schutzfeldern nicht sicherheitsrelevant und darf ignoriert werden.

Die Erfindung befasst sich mit einer zeitlichen Betrachtung der Verteilung geblendeter Messungen oder Scans. Das Detektionsvermögen darf über eine gewisse Zeitspanne, vorzugsweise nach der Norm EN61496-3 für fünf Sekunden verschlechtert sein. Diese Zeitspanne steht demnach zur Verfügung, um zu beurteilen, ob eine Blendung sicherheitsrelevant ist und der Laserscanner 10 ein sicherheitsgerichtetes Abschaltsignal ausgeben muss. Nach der einleitend genannten unveröffentlichten europäischen Patentanmeldung mit dem Aktenzeichen 21187348.4 wird die Blendungswarnung zurückgesetzt, wenn eine gewisse Anzahl Scans keine Blendung aufweisen. Liegt dennoch die Blendungswarnung volle fünf Sekunden an, so wird das sicherheitsgerichtete Abschaltsignal ausgegeben.

In der Situation gemäß den Figuren 2 bis 4 bei Dauerblendung kommt es nie dazu, dass die Blendungswarnung zurückgesetzt wird. Das liegt in der Natur der Sache und ist auch durch intelligentere Auswertung nicht zu beheben. Eine erhebliche Verbesserungsmöglichkeit besteht aber in dem Falle, dass die Fremdlichtquelle periodisch blendet, wie ein weiterer Laserscanner oder eine 3D-TOF-Kamera. Das illustrieren die Figuren 5 bis 7 analog den Figuren 2 bis 4 nun für eine periodische Störung, in diesem Beispiel alle 30 ms bei einer Scanperdiode des Laserscanners 10 von 40 ms.

Figur 5 zeigt analog der Figur 2 die Reflektor- und Rauschflags nun bei periodischer Blendung. Es ist deutlich zu erkennen, dass die grau hinterlegten Zellen mit gesetztem Reflektorflag in periodisch wiederkehrenden Scans auftauchen und in den Scans dazwischen weder Reflektor- noch Rauschflag gesetzt wird.

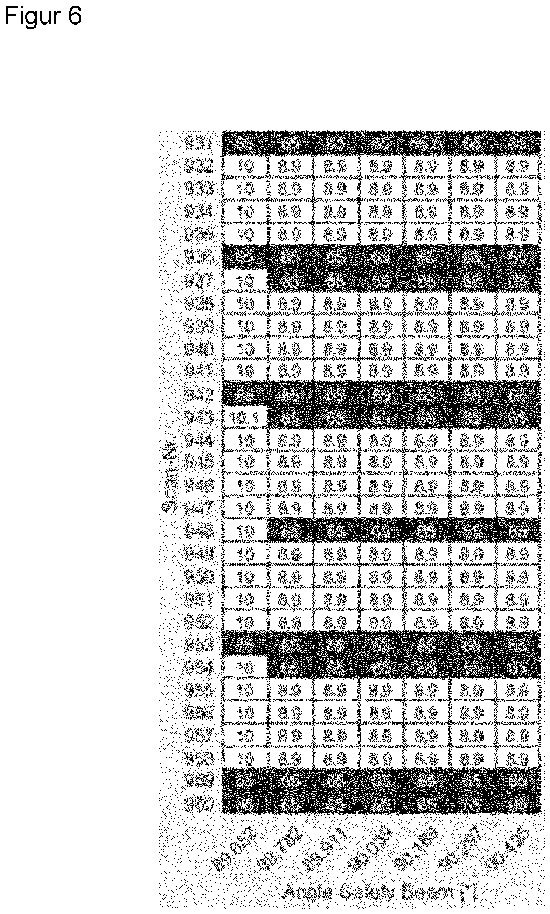

Figur 6 zeigt analog der Figur 3 die bei periodischer Blendung gemessenen Abstände. In den dunkel hinterlegten Zellen konnte kein Objekt erfasst beziehungsweise kein Abstand gemessen werden, deshalb wird hier eine "65" als Wert für unendlich eingetragen.

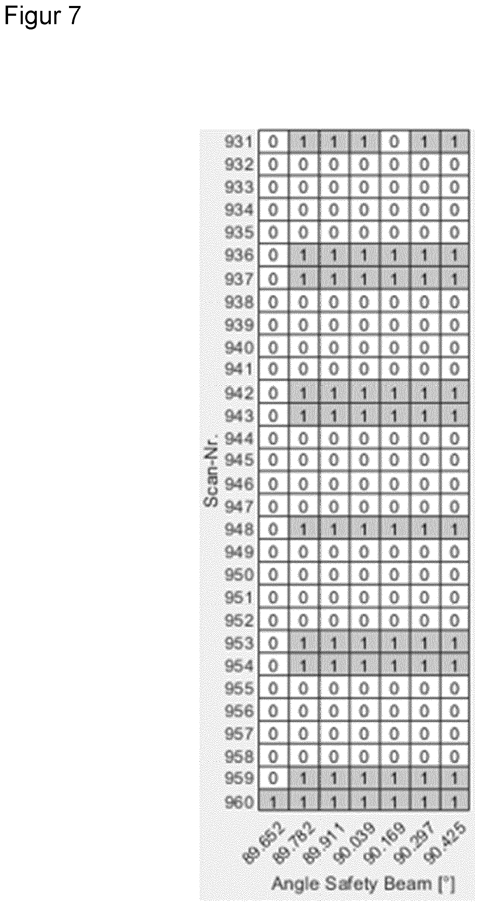

In Figur 7 sind analog der Figur 4 die Reflektor- und Rauschflags der Figur 5 mit den Abstandsmessungen der Figur 6 zu Blendungsflags kombiniert. Es sind etwa dreißig Prozent der Scans geblendet, in wiederkehrenden Gruppen von ein bis zwei Scans. Das Zeitmuster der geblendeten Scans resultiert als eine Art Schwebung aus der Scanfrequenz und der Wiederholfrequenz der periodischen Fremdlichteinstrahlung.

Nach der Blendungserkennung der einleitend genannten unveröffentlichten europäischen Patentanmeldung mit dem Aktenzeichen 21187348.4 wird die Blendungswarnung erst zurückgesetzt, wenn für eine ausreichende Dauer keine Blendung mehr erkannt wird. Die jeweils vier blendungsfreien Scans der Figur 7 genügen dafür nicht. Es ist auch nicht möglich, die Dauer bis zum Zurücksetzen der Blendungswarnung einfach weiter zu verkürzen, weil damit Blendungen übersehen würden, und zudem die erläuterte Schwebung gar nicht garantiert, dass es jemals eine Dauer bis zum Zurücksetzen gibt, die kurz genug wäre. Die Blendungswarnung bleibt also trotz der nur periodischen Blendung permanent aktiv, bis nach fünf Sekunden die sicherheitsgerichtete Abschaltung wegen Blendung ausgelöst wird.

Erfindungsgemäß wird deshalb von der Steuer- und Auswertungseinheit 32 das Zeitmuster der geblendeten Zellen oder Scans analysiert, wie es in Figur 7 beispielhaft illustriert ist. In einer Ausführungsform werden innerhalb der vorgegebenen Zeitspanne eines erlaubten verringerten Detektionsvermögens von beispielsweise fünf Sekunden die Anzahl der geblendeten Scans oder Zellen gezählt. Dies kann insbesondere fortlaufend oder rollierend durchgeführt werden. Liegt beispielsweise die Abtastperiode bei 50 ms, so können über fünf Sekunden einhundert Scans ausgewertet werden. Überschreitet die Anzahl der geblendeten Scans einen zuvor definierten kritischen Anteil oder Grenzwert, wird dies als kritischer Blendungszustand angesehen und ein sicherheitsgerichtetes Abschaltsignal ausgegeben.

Der Laserscanner 10 erkennt somit, dass keine Dauerblendung vorliegt, sondern erkennt den Anteil von dreißig Prozent der geblendeten Scans und kann entscheiden, ob das noch tolerierbar ist. Es kann auch eine entsprechende Information ausgegeben werden, dass eine periodische Blendung erkannt wurde, dies erleichtert die Diagnose und ermöglicht es, den Blendungseinfluss zu verringern oder zu beseitigen.

In der sicherheitstechnischen Betrachtung ist eine Blendung durch einen weiteren Laserscanner oder eine 3D-TOF-Kamera in aller Regel unkritisch, da auch dunkle Objekte der gemäß dem geforderten Detektionsvermögen noch zu erfassenden Mindestausdehnung aufgrund der typischen Beleuchtungsoptiken solcher störender Sensoren nicht überstrahlt werden. Es ist daher sehr unwahrscheinlich, dass eine periodische Fremdlichtstörung zu einem sicherheitsrelevanten Detektionsausfall führt. Hingegen können große Halogenscheinwerfer gerade bei waagerechter Ausrichtung sehr wohl die genannten dunklen Objekte überstrahlen. Falls eine geometrische Betrachtung ergibt, dass kleinere Objekte auch von einem weiteren Laserscanner oder der Beleuchtung einer 3D-TOF-Kamera überstrahlt werden, kann die erfindungsgemäße Blendungserkennung für entsprechend feines Detektionsvermögen deaktiviert werden, oder die Möglichkeit der Anwendung wird auf bestimmte Schutzfeldkonfigurationen und Reichweiten beschränkt.

Die Betrachtung des zeitlichen Musters der geblendeten Zellen oder Scans gemäß dem Beispiel der Figur 7 kann komplexer ausfallen als ein einfaches Zählen. Es sind praktisch beliebige Mustererkennungen vorstellbar, die bestimmte Zeitmuster als kritisch und andere als unkritisch klassifizieren beziehungsweise zwischen einer Dauerblendung und einer periodischen Blendung unterscheiden. Hier steht das gesamte umfangreiche an sich bekannte Arsenal an Filtern und Mustererkennungsverfahren einschließlich neuronaler Netze zur Verfügung. In einer erfindungsgemäßen Alternative werden die geblendeten und nicht geblendeten Scans als Zeitreihe aufgefasst, und es werden darin mit Fourieranalysen, Autokorrelationen oder daran angelehnten vereinfachten Verfahren Periodizitäten aufgefunden.

In Kenntnis eines Zeitmusters der Blendung können die betroffenen Scans oder Messungen herausgerechnet werden, oder es wird gezielt immer dann gemessen, wenn keine Blendung vorliegt. Gerade dem Puls einer 3D-TOF-Kamera kann auf sehr kurzen Zeitskalen durch entsprechenden Zeitversatz ausgewichen werden. Das Zeitmuster kann für derlei Maßnahmen eingelernt werden, während vorübergehend keine eigenen Messungen stattfinden und eine überwachte Maschine nicht über den Ausgang 34 freigegeben wird.

In den bisherigen Ausführungsformen werden die geblendeten Scans oder Messungen durch Auswertung des Empfangssignals des Lichtempfängers 24 aufgefunden. Zusätzlich oder alternativ kann dafür ein weiterer Lichtempfänger eingesetzt werden, mit dem Blendungen erkannt werden. Das kann ein dedizierter Lichtempfänger sein, es können aber auch beispielsweise vorhandene Lichtempfänger einer Frontscheibenüberwachung mitgenutzt werden.

Eine vorteilhafte Ergänzung ist eine Erinnerungsfunktion oder ein Objekttracking. Dadurch ist nach einer Blendung sofort bekannt, wo bereits ein Objekt erfasst war. Insbesondere kann bei einer Mehrfachauswertung, d.h. der Forderung, dass ein Schutzfeldeingriff über mehrere aufeinanderfolgende Scans bestätigt werden muss, ehe eine Absicherung erfolgt, die Anzahl geforderter Mehrfachauswertungen reduziert werden, auch bis auf Eins, wenn am entsprechenden Ort bereits früher ein Objekt erfasst war oder gemäß Objekttracking erwartet wird.

## Patentansprüche

1. Optoelektronischer Sensor (10), insbesondere Laserscanner, zur Erfassung von Objekten in einem Überwachungsbereich (18), der einen Lichtsender (12) zum Aussenden mindestens eines Lichtstrahls (14), eine bewegliche Ablenkeinheit (16) zur periodischen Abtastung des Überwachungsbereichs (18) mit dem mindestens einen Lichtstrahl (14), einen Lichtempfänger (24) zum Erzeugen eines Empfangssignals aus dem von den Objekten remittierten Lichtstrahl (20) und eine Steuer- und Auswertungseinheit (32) aufweist, die dafür ausgebildet ist, aus dem Empfangssignal Informationen über die Objekte in dem Überwachungsbereich (18) zu gewinnen, insbesondere einen Abstand mittels eines Lichtlaufzeitverfahrens zu messen, sowie erste Phasen mit Blendung und zweite Phasen ohne Blendung des Lichtempfängers (24) zu erkennen und im Falle einer die sichere Erfassung verhindernden Blendung in einen Blendungszustand überzugehen, wobei eine Phase eine Messperiode mit Bestimmung eines Messwerts oder eine Periode der beweglichen Abtasteinheit ist, was auch als ein Scan bezeichnet wird,
**dadurch gekennzeichnet,**
**dass** die Steuer- und Auswertungseinheit (32) dafür ausgebildet ist, anhand der Verteilung der ersten Phasen und zweiten Phasen zu entscheiden, ob eine Blendung die sichere Erfassung verhindert, wobei zur Bewertung der Verteilung die ersten Phasen über ein Zeitintervall von einigen Sekunden gezählt werden oder eine kumulierte Dauer der ersten Phasen über das Zeitintervall bestimmt wird, wobei als Kriterium der Bewertung der Verteilung geprüft wird, ob die ersten Phasen einen kritischen Anteil überschreiten, und/oder ein Zeitmuster der ersten Phasen und der zweiten Phasen bestimmt wird, wobei die geblendeten und nicht geblendeten Scans als Zeitreihe aufgefasst werden und darin mit einer Fourieranalyse, einer Autokorrelation oder einem daran angelehnten vereinfachten Verfahren Periodizitäten aufgefunden werden, um eine periodische Blendung zu tolerieren, sofern genügend zweite Phasen ohne Blendung verbleiben.

2. Sensor (10) nach Anspruch 1,
wobei die Steuer- und Auswertungseinheit (32) dafür ausgebildet ist, die Erfassung von Objekten in Zeiten zu legen, in denen gemäß einem erkannten Zeitmuster voraussichtlich zweite Phasen liegen.

3. Sensor (10) nach einem der Ansprüche 1 oder 2,
der einen zusätzlichen Lichtempfänger zur Blendungserkennung aufweist.

4. Sensor (10) nach einem der vorhergehenden Ansprüche,
wobei die Steuer- und Auswertungseinheit (32) dafür ausgebildet ist, eine Blendung anhand des Empfangssignals zu erkennen.

5. Sensor (10) nach einem der vorhergehenden Ansprüche,
wobei die Steuer- und Auswertungseinheit (32) dafür ausgebildet ist, eine Blendung anhand einer Pegelbestimmung des Empfangssignals oder einer Bestimmung des Signal-Rausch-Verhältnisses des Empfangssignals zu erkennen.

6. Sensor (10) nach Anspruch 5,
wobei die Steuer- und Auswertungseinheit (32) dafür ausgebildet ist, ein Reflektorbit zu setzen, wenn der Pegel höher als eine Reflektorschwelle ist und/oder ein Rauschflag zu setzen, wenn das Signal-Rauschverhältnis geringer als eine Rauschschwelle.

7. Sensor (10) nach Anspruch 5 oder 6,
wobei die Steuer- und Auswertungseinheit (32) dafür ausgebildet ist, eine Phase als erste Phase mit Blendung zu erkennen, wenn der Pegel des Empfangssignals höher als eine Reflektorschwelle und/oder das Signal-Rauschverhältnis geringer als eine Rauschschwelle und zugleich kein Objekt erfasst ist, wobei mit "und zugleich" eine Klammerung ausgedrückt werden soll, die Bedingung, dass kein Objekt erfasst ist, also zusätzlich zu der zuvor genannten Alternative vorliegen soll.

8. Sensor (10) nach einem der vorhergehenden Ansprüche,
wobei die Steuer- und Auswertungseinheit (32) dafür ausgebildet ist festzustellen, ob sich ein Objekt in einem innerhalb des Überwachungsbereichs (18) konfigurierten Schutzfeld befindet, und in diesem Fall eine sicherheitsgerichtete Reaktion einzuleiten.

9. Sensor (10) nach einem der vorhergehenden Ansprüche,
wobei die Steuer- und Auswertungseinheit (32) dafür ausgebildet ist, die ersten Phasen und zweiten Phasen in Abhängigkeit von einer Winkelstellung der Ablenkeinheit (16) zu bestimmen.

10. Sensor (10) nach einem der vorhergehenden Ansprüche,
wobei die Steuer- und Auswertungseinheit (32) dafür ausgebildet ist, in dem Blendungszustand oder beim Übergang in den Blendungszustand eine sicherheitsgerichtete Reaktion auszulösen.

11. Sensor (10) nach einem der vorhergehenden Ansprüche,
wobei die Steuer- und Auswertungseinheit (32) dafür ausgebildet ist, ein Einschränkungssignal auszugeben, das eine eingeschränkte Detektionsfähigkeit des Sensors (10) anzeigt, insbesondere eine verringerte Reichweite.

12. Verfahren zur Erfassung von Objekten in einem Überwachungsbereich (18), bei dem mindestens ein Lichtstrahl (14) ausgesandt, mit dem mindestens einen Lichtstrahl (14) der Überwachungsbereich (18) periodisch abgetastet, aus dem von den Objekten remittierten Lichtstrahl (20) mit einem Lichtempfänger (24) ein Empfangssignal erzeugt und das Empfangssignal ausgewertet wird, um Informationen über die Objekte in dem Überwachungsbereich (18) zu gewinnen, insbesondere einen Abstand mittels eines Lichtlaufzeitverfahrens zu messen, wobei weiterhin erste Phasen mit Blendung und zweite Phasen ohne Blendung des Lichtempfängers (24) erkannt werden und im Falle einer die sichere Erfassung verhindernden Blendung ein Übergang in einen Blendungszustand erfolgt, wobei eine Phase eine Messperiode mit Bestimmung eines Messwerts oder eine Periode der beweglichen Abtasteinheit ist, was auch als ein Scan bezeichnet wird,
**dadurch gekennzeichnet,**
**dass** anhand der Verteilung der ersten Phasen und zweiten Phasen entschieden wird, ob eine Blendung die sichere Erfassung verhindert, wobei zur Bewertung der Verteilung die ersten Phasen über ein Zeitintervall von einigen Sekunden gezählt werden oder eine kumulierte Dauer der ersten Phasen über das Zeitintervall bestimmt wird, wobei als Kriterium der Bewertung der Verteilung geprüft wird, ob die ersten Phasen einen kritischen Anteil überschreiten, und/oder ein Zeitmuster der ersten Phasen und der zweiten Phasen bestimmt wird, wobei die geblendeten und nicht geblendeten Scans als Zeitreihe aufgefasst werden und darin mit einer Fourieranalyse, einer Autokorrelation oder einem daran angelehnten vereinfachten Verfahren Periodizitäten aufgefunden werden, um eine periodische Blendung zu tolerieren, sofern genügend zweite Phasen ohne Blendung verbleiben.

## Claims

1. An optoelectronic sensor (10), in particular a laser scanner, for detecting objects in a monitoring area (18), the sensor (10) comprising a light transmitter (12) for transmitting at least one light beam (14), a movable deflection unit (16) for periodically scanning the monitoring area (18) with the at least one light beam (14), a light receiver (24) for generating a received signal from the remitted light beam (20) remitted by the objects, and a control and evaluation unit (32) configured to obtain information about the objects in the monitoring area (18) from the received signal, in particular to measure a distance by means of a light time-of-flight method, and to recognize first phases with glare and second phases without glare of the light receiver (24) and, in the event of glare preventing reliable detection, to switch to a glare state, a phase being a measuring period with determination of a measured value or a period of the movable scanning unit, which is also referred to as a scan,
**characterized in that** the control and evaluation unit (32) is configured to use the distribution of the first phases and second phases to decide whether glare is preventing reliable detection, the first phases being counted over a time interval of a few seconds or a cumulative duration of the first phases being determined over the time interval in order to evaluate the distribution, the criterion for evaluating the distribution being a check to determine whether the first phases exceed a critical proportion, and/or a time pattern of the first phases and the second phases is determined, wherein the glared and non-glared scans are interpreted as a time series and periodicities are found therein using a Fourier analysis, an autocorrelation or a simplified method based thereon, in order to tolerate periodic glare, provided that sufficient second phases without glare remain.

2. The sensor (10) according to claim 1,
wherein the control and evaluation unit (32) is configured to place the detection of objects in times in which second phases are likely to occur according to a recognized time pattern.

3. The sensor (10) according to claim 1 or 2,
comprising an additional light receiver for glare detection.

4. The sensor (10) according to any of the preceding claims,
wherein the control and evaluation unit (32) is configured to detect glare on the basis of the received signal.

5. The sensor (10) according to any of the preceding claims,
wherein the control and evaluation unit (32) is configured to detect a glare on the basis of a level determination of the received signal or a determination of the signal-to-noise ratio of the received signal.

6. The sensor (10) according to claim 5,
wherein the control and evaluation unit (32) is configured to set a reflector bit when the level is higher than a reflector threshold and/or to set a noise flag when the signal-to-noise ratio is lower than a noise threshold.

7. The sensor (10) according to claim 5 or 6,
wherein the control and evaluation unit (32) is configured to recognize a phase as a first phase with glare if the level of the received signal is higher than a reflector threshold and/or the signal-to-noise ratio is lower than a noise threshold and at the same time no object is detected, wherein "and at the same time" is intended to express a parenthesis, i.e. the condition that no object is detected is intended to be present in addition to the aforementioned alternative.

8. The sensor (10) according to any of the preceding claims,
wherein the control and evaluation unit (32) is configured to determine whether an object is located in a protective field configured within the monitoring area (18), and in this case to initiate a safety-oriented reaction.

9. The sensor (10) according to any of the preceding claims,
wherein the control and evaluation unit (32) is configured to determine the first phases and second phases as a function of an angular position of the deflection unit (16).

10. The sensor (10) according to any of the preceding claims,
wherein the control and evaluation unit (32) is configured to trigger a safety-related reaction in the glare state or during the transition to the glare state.

11. The sensor (10) according to any of the preceding claims,
wherein the control and evaluation unit (32) is configured to output a restriction signal which indicates a restricted detection capability of the sensor (10), in particular a reduced range.

12. A method for detecting objects in a monitoring area (18), wherein at least one light beam (14) is transmitted, the monitoring area (18) is periodically scanned with the at least one light beam (14), a received signal is generated with a light receiver (24) from the remitted light beam (20) remitted by the objects and the received signal is evaluated in order to obtain information about the objects in the monitoring area (18), in particular to measure a distance by means of a light time-of-flight method, wherein furthermore first phases with glare and second phases without glare of the light receiver (24) are detected and, in the event of glare preventing reliable detection, a transition to a glare state takes place, wherein a phase is a measuring period with determination of a measured value or a period of the movable scanning unit, which is also referred to as a scan,
**characterized in that** the distribution of the first phases and second phases is used to decide whether glare is preventing reliable detection, the first phases being counted over a time interval of a few seconds or a cumulative duration of the first phases being determined over the time interval in order to evaluate the distribution, the criterion for evaluating the distribution being whether the first phases exceed a critical proportion, and/or a time pattern of the first phases and the second phases is determined, wherein the glared and non-glared scans are interpreted as a time series and periodicities are found therein using a Fourier analysis, an autocorrelation or a simplified method based thereon, in order to tolerate periodic glare, provided that sufficient second phases remain without glare.

## Revendications

1. Capteur optoélectronique (10), en particulier un scanner laser, pour la détection des objets dans une zone de surveillance (18), comprenant un émetteur de lumière (12) pour l'émission d'au moins un faisceau lumineux (14), une unité de déviation mobile (16) pour le balayage périodique de la zone de surveillance (18) avec l'au moins un faisceau lumineux (14), un récepteur de lumière (24) pour générer un signal de réception à partir du faisceau lumineux émis (20) par les objets, et une unité de commande et d'évaluation (32) configurée pour obtenir des informations sur les objets dans la zone de surveillance (18) à partir du signal de réception, en particulier de mesurer une distance au moyen d'un procédé de temps de vol de la lumière, ainsi que de reconnaître des premières phases avec éblouissement et des deuxièmes phases sans éblouissement du récepteur de lumière (24) et de passer à un état d'éblouissement dans le cas d'un éblouissement empêchant la détection sûre, dans lequel une phase est une période de mesure avec détermination d'une valeur mesurée ou une période de l'unité de balayage mobile, ce qui est également appelé un balayage
**caractérisé en ce que**
l'unité de commande et d'évaluation (32) est configurée pour décider, à l'aide de la répartition des premières phases et des deuxièmes phases si un éblouissement empêche la détection sûre, dans lequel les premières phases sont comptées sur un intervalle de temps de quelques secondes pour évaluer la répartition ou une durée cumulée des premières phases est déterminée sur l'intervalle de temps, dans lequel le critère d'évaluation de la répartition est vérifié si les premières phases dépassent une proportion critique, et/ou un schéma temporel des premières phases et des deuxièmes phases est déterminé, dans lequel les balayages éblouis et non éblouis sont considérés comme une série temporelle et des périodicités y sont trouvées avec une analyse de Fourier, d'une autocorrélation ou d'un procédé simplifié basé sur celle-ci, afin de tolérer un éblouissement périodique, dans la mesure où il reste suffisamment de deuxièmes phases sans éblouissement.

2. Capteur (10) selon la revendication 1,
dans lequel l'unité de commande et d'évaluation (32) est configurée pour placer la détection d'objets à des moments où, selon un modèle temporel reconnu, se situent vraisemblablement des deuxièmes phases.

3. Capteur (10) selon l'une des revendications 1 ou 2,
comprenant un récepteur de lumière supplémentaire pour la détection de l'éblouissement.

4. Capteur (10) selon l'une des revendications précédentes,
dans lequel l'unité de commande et d'évaluation (32) est configurée pour détecter un éblouissement à l'aide du signal de réception.

5. Capteur (10) selon l'une des revendications précédentes,
dans lequel l'unité de commande et d'évaluation (32) est configurée pour détecter un éblouissement à l'aide d'une détermination du niveau du signal de réception ou d'une détermination du rapport signal/bruit du signal de réception.

6. Capteur (10) selon la revendication 5,
dans lequel l'unité de commande et d'évaluation (32) est configurée pour mettre un bit de réflecteur lorsque le niveau est supérieur à un seuil de réflecteur et/ou pour mettre un drapeau de bruit lorsque le rapport signal/bruit est inférieur à un seuil de bruit.

7. Capteur (10) selon la revendication 5 ou 6,
dans lequel l'unité de commande et d'évaluation (32) est configurée pour reconnaître une phase comme une première phase avec éblouissement si le niveau du signal de réception est supérieur à un seuil de réflecteur et/ou le rapport signal/bruit est inférieur à un seuil de bruit et qu'en même temps aucun objet n'est détecté, dans lequel "et en même temps" est destiné à exprimer une parenthèse, la condition selon laquelle aucun objet n'est détecté devant donc être présente en plus de l'alternative mentionnée précédemment

8. Capteur (10) selon l'une des revendications précédentes,
dans lequel l'unité de commande et d'évaluation (32) est configurée pour déterminer si un objet se trouve dans un champ de protection configuré dans la zone de surveillance (18) et, dans ce cas, pour déclencher une réaction de sûreté.

9. Capteur (10) selon l'une des revendications précédentes,
dans lequel l'unité de commande et d'évaluation (32) est configurée pour déterminer les premières phases et les deuxièmes phases en fonction d'une position angulaire de l'unité de déviation (16).

10. Capteur (10) selon l'une des revendications précédentes,
dans lequel l'unité de commande et d'évaluation (32) est configurée pour déclencher une réaction de sûreté dans l'état d'éblouissement ou pendant la jonction à l'état d'éblouissement.

11. Capteur (10) selon l'une des revendications précédentes,
dans lequel l'unité de commande et d'évaluation (32) est configurée pour émettre un signal de restriction qui indique une capacité de détection limitée du capteur (10), en particulier une portée réduite.

12. Procédé de détection d'objets dans une zone de surveillance (18), dans lequel au moins un faisceau lumineux (14) est émis, la zone de surveillance (18) est balayée périodiquement avec l'au moins un faisceau lumineux (14), un signal de réception est généré avec un récepteur de lumière (24) à partir du faisceau lumineux émis (20) par les objets et le signal de réception est évalué afin d'obtenir des informations sur les objets dans la zone de surveillance (18), en particulier pour mesurer une distance au moyen d'un procédé de temps de vol de la lumière, dans lequel des premières phases avec éblouissement et des deuxièmes phases sans éblouissement du récepteur de lumière (24) sont en outre reconnues et, dans le cas d'un éblouissement empêchant la détection sûre, un passage à un état d'éblouissement s'effectue, dans lequel une phase est une période de mesure avec détermination d'une valeur mesurée ou une période de l'unité de balayage mobile, ce qui est également appelé un balayage
**caractérisé en ce**
**qu'**à l'aide de la répartition des premières phases et des deuxièmes phases il est décidé si un éblouissement empêche la détection sûre, dans lequel les premières phases sont comptées sur un intervalle de temps de quelques secondes pour évaluer la répartition ou une durée cumulée des premières phases est déterminée sur l'intervalle de temps, dans lequel le critère d'évaluation de la répartition est vérifié si les premières phases dépassent une proportion critique, et/ou un schéma temporel des premières phases et des deuxièmes phases est déterminé, dans lequel les balayages éblouis et non éblouis sont considérés comme une série temporelle et des périodicités y sont trouvées avec une analyse de Fourier, d'une autocorrélation ou d'un procédé simplifié basé sur celle-ci, afin de tolérer un éblouissement périodique, dans la mesure où il reste suffisamment de deuxièmes phases sans éblouissement.
